# FASCICULE DE BREVET EUROPEEN

(11) **EP 2 370 779 B1**
(45) Date de publication et mention de la délivrance du brevet: **21.05.2014**
(21) Numéro de dépôt: 09805803.5
(22) Date de dépôt: 29.12.2009
(51) Int. Cl.: G01B 9/02, G01B 11/24, G01B 21/00, G01B 7/34

(54) **UTILISATION D'UN DISPOSITIF A FIBRE OPTIQUE D'ANALYSE INTERFEROMETRIQUE DE L'ETAT DE SURFACE D'UN OBJET**
VERWENDUNG EINER FASEROPTISCHEN EINRICHTUNG ZUR INTERFERROMETRISCHEN ANALYSE DES OBERFLÄCHENZUSTANDS EINES OBJEKTS
USE OF AN OPTICAL FIBRE DEVICE FOR INTERFEROMETRIC ANALYSIS OF THE SURFACE CONDITION OF AN OBJECT

(30) Priorité: 29.12.2008 FR 0859091
(43) Date de publication de la demande: 05.10.2011
(73) Titulaire: Université Joseph Fourier, 38041 Grenoble Cedex 9 (FR); Centre National de la Recherche Scientifique, 75016 Paris (FR); Commissariat à l'Énergie Atomique et aux Énergies Alternatives, 75015 Paris (FR)
(72) Inventeur: CHEVRIER, Joël, F-38120 Saint Egrève (FR); HUANT, Serge, F-38042 Grenoble Cedex 9 (FR); SCHWARTZ, Wilfrid, F-38042 Grenoble Cedex 9 (FR); SIRIA, Alessandro, F-38042 Grenoble Cedex 9 (FR)
(74) Mandataire: Thibon, Laurent
(86) Numéro de dépôt international: PCT/FR2009/052717
(87) Numéro de publication internationale: WO 2010/076540

(56) Documents cités:
- EP-A- 0 487 233
- US-A- 5 812 723
- US-A1- 2003 046 024
- O. BERGOSSI, M. SPAJER: "Scanning local probe interferometer and reflectometer: application to very low relief objects" PROC. SPIE INTERFEROMETRIC FIBER SENSING, vol. 2341, 1994, pages 239-248, XP002538769 DOI: 10.1117/12.195546 cité dans la demande

## Description

### Domaine de l'invention

La présente invention concerne l'utilisation d'un dispositif à fibre optique d'analyse interférométrique de l'état de surface d'un objet adapté à détecter des variations de relief avec une précision axiale de l'ordre du nanomètre.

De telles mesures sont en particulier utiles pour l'étude de microcomposants électroniques, mécaniques ou électromécaniques et de milieux biologiques.

Pour fixer des ordres de grandeur, la présente description sera faite dans le cas particulier où la longueur d'onde optique d'analyse est située dans le domaine du visible, par exemple dans le rouge à une longueur d'onde de l'ordre de 600 nm. On comprendra toutefois que la présente invention s'applique également au cas où la longueur d'onde d'analyse est différente, par exemple située à toute valeur désirée dans le domaine du visible ou de l'infrarouge. L'homme de l'art saura alors choisir une fibre optique appropriée et adapter les dimensions en fonction de la longueur d'onde choisie.

### Exposé de l'art antérieur

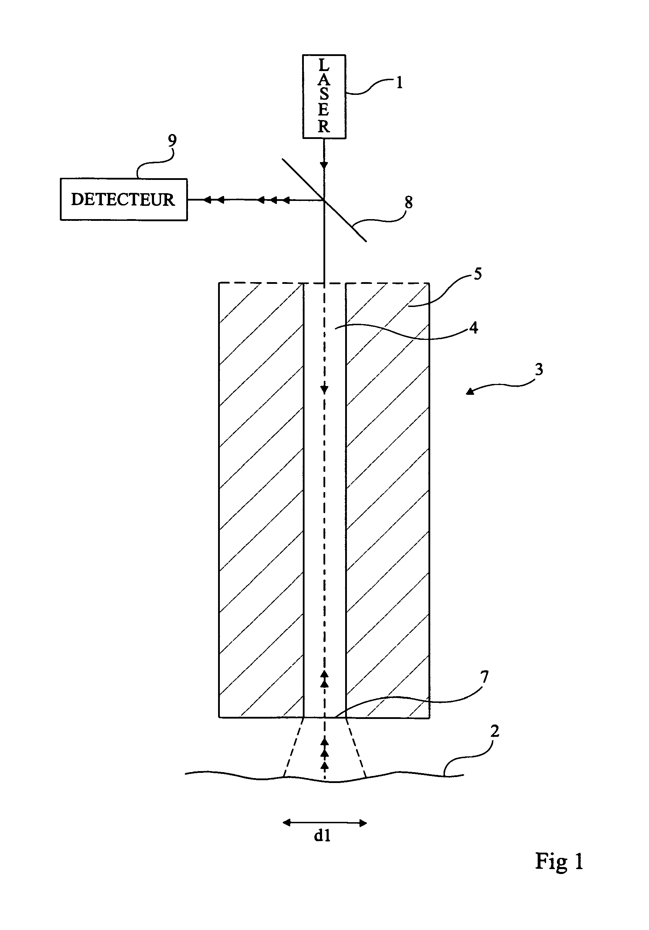

La figure 1 illustre de façon très schématique le fonctionnement d'un dispositif optique d'analyse interférométrique de l'état de surface d'un objet. Une source optique 1 envoie un faisceau lumineux, par exemple un faisceau laser, vers la surface 2 d'un objet à analyser par l'intermédiaire d'une fibre optique 3 comprenant un coeur 4 et une gaine optique 5. Le faisceau laser forme sur l'objet une tache lumineuse de diamètre d1. Le faisceau lumineux est renvoyé dans la fibre d'une part par la surface d'extrémité 7 de la fibre, d'autre part par l'objet 2, en direction d'une séparatrice 8 et d'un détecteur 9. Ainsi, au niveau du détecteur, on peut observer une interférence entre la lumière renvoyée par l'extrémité de la fibre et la lumière renvoyée par l'objet.

Si on déplace la fibre par rapport à l'objet et que l'objet n'est pas parfaitement plan et orthogonal à l'axe du faisceau de sortie de la fibre, on observe une variation de la figure d'interférence et cette variation permet de déterminer la topographie de l'objet.

Un tel dispositif a une très bonne résolution axiale ou verticale mais une mauvaise résolution latérale. En effet, avec la divergence de la fibre optique, le diamètre d1 de la tache lumineuse est au mieux, quand l'extrémité de la fibre est très proche de l'objet, égal au diamètre du coeur de la fibre, c'est-à-dire une valeur de l'ordre de 3 à 5 µm pour une fibre adaptée à fonctionner avec de lumière rouge d'une longueur d'onde de 600 nm. En outre, pour avoir un système d'interférence à fort contraste, il faut que les faisceaux renvoyés par l'extrémité de la fibre et par l'objet soient aussi intenses que possible et aient des intensités sensiblement du même ordre de grandeur. Ceci conduit à placer l'extrémité de la fibre extrêmement près de l'objet, c'est-à-dire à une distance inférieure à 10 µm.

Par ailleurs, une fibre optique classique pour le rouge comporte une gaine optique d'un diamètre externe de l'ordre de 100 µm. Il se pose alors un problème pratique qui est que, quand on déplace la fibre par rapport à l'objet très près de cet objet, il y a un fort risque de collision entre les bords de la fibre et l'objet, d'où il peut résulter une dégradation de la fibre et/ou de l'objet.

On a donc proposé des systèmes optiques d'analyse interférométrique de l'état de surface d'un objet dans lesquels la lumière de sortie de la fibre est focalisée sur l'objet.

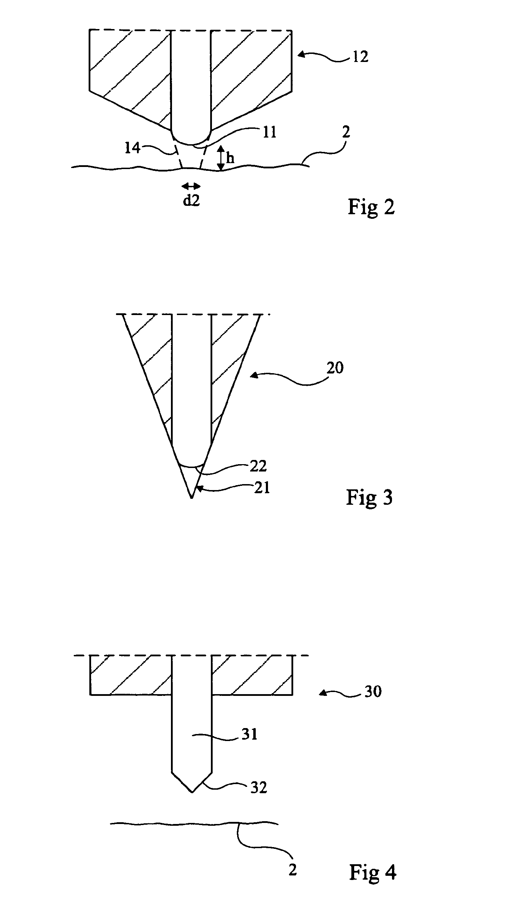

La figure 2 représente une extrémité de fibre correspondant à une telle structure. L'extrémité 11 du coeur d'une fibre optique 12 est conformée en lentille, ou munie d'une lentille, de sorte que le faisceau lumineux 14 de sortie de la fibre est focalisé en une petite tache lumineuse de diamètre d2. Comme cela est bien connu en optique, le diamètre d2 est, de façon optimale, sensiblement égal à la demi-longueur d'onde du faisceau incident, c'est-à-dire qu'il pourra avoir un diamètre de l'ordre de 300 nm si le faisceau incident a une longueur d'onde de l'ordre de 600 nm.

On améliore ainsi beaucoup la résolution latérale. Toutefois, un inconvénient d'un tel système est que la distance h entre l'extrémité de la fibre optique et l'objet doit être maintenue en permanence sensiblement égale à la distance focale de la lentille d'extrémité de la fibre. On arrive donc à des systèmes d'analyse complexes qui doivent comprendre des systèmes d'asservissement pour maintenir cette distance constante.

Par ailleurs, on a développé pour diverses applications des fibres à extrémité conique.

La figure 3 représente un exemple de dispositif à fibre à extrémité conique tel que décrit dans l'article de Olivier Bergosi et Michel Spajer, "A Scanning Local Probe Interferometer and Reflectometer: Application to very low relief objects", publié en 1994 dans la revue SPIE, Interferometric Fiber Sensing, volume 2341, pages 239 à 248.

Le dispositif décrit comprend une fibre optique 20 présentant une extrémité conique pointue 21. Ce dispositif est décrit pour des mesures interférométriques d'état de surface d'un matériau en champ proche ou quasi proche, c'est-à-dire quand la pointe du cône est située à des distances de l'objet inférieures à la longueur d'onde optique, de l'ordre de 600 nm. Ainsi, ce dispositif bien que très précis dans cette application à la fois en résolution axiale et en résolution latérale est très difficile à utiliser car il doit être asservi à une distance extrêmement proche de la surface à analyser, ce qui entraîne en pratique qu'il y a de très forts risques de collision entre la pointe et la surface à analyser, d'où il résulte des ruptures de pointe et une nécessité de renouveler périodiquement la fibre optique.

Dans ce même article, on expose également l'utilisation du dispositif en champ lointain, c'est-à-dire à des distances de l'objet pouvant atteindre quelques micromètres. Mais dans ce cas, l'extrémité de la fibre est arrondie comme cela est indiqué par la référence 22 et on se retrouve avec un dispositif très similaire à celui décrit en relation avec la figure 2.

L'utilisation d'une fibre à extrémité conique est également décrite dans EP-A-0283 256. Ce document représente une extrémité de fibre telle que représentée en figure 4. L'extrémité du coeur 31 de la figure optique est dégagée et se termine en un cône 32 qui est représenté avec un angle au sommet de l'ordre de 90°. Toutefois, ce dispositif n'est pas utilisé pour des mesures interférométriques. Il n'est pas décrit que de la lumière est renvoyée par réflexion sur l'extrémité de la fibre optique mais seulement que de la lumière est renvoyée par la surface de l'objet à analyser. La lumière renvoyée est redirigée vers le laser source et ce sont les perturbations apportées au laser par cette lumière renvoyée qui sont analysées pour fournir une indication de la variation de distance entre l'objet et la pointe de la fibre. Il est indiqué que la distance entre objet et pointe de la fibre peut être comprise entre 5 et 10 µm, et étant donné le type de mesure utilisé, il est clair que l'on analyse dans ce cas là de très faibles lumières renvoyées, de l'ordre de 10⁻⁴ à 10⁻⁶ fois la lumière émise.

En outre, ce document enseigne une méthode très complexe de déplacement de l'extrémité de la fibre, celle-ci devant être métallisée et mise en vibration.

### Résumé

Ainsi, un objet d'un mode de réalisation de la présente invention est de prévoir un dispositif qui pallie au moins certains inconvénients des dispositifs antérieurs, à savoir notamment :
- qui permette d'utiliser une distance relativement importante entre la pointe d'une fibre optique et la surface à analyser,
- qui ne nécessite pas d'asservissement en hauteur de la fibre, et
- qui soit relativement simple et compatible en ce qui concerne le système de mesure avec les dispositifs interférométriques classiques.

Ainsi, un mode de réalisation de la présente invention prévoit l'utilisation d'un dispositif optique d'analyse interférométrique de l'état de surface d'un objet telle que revendiquée.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1, décrite précédemment, représente schématiquement un dispositif optique d'analyse interférométrique de la topographie d'une surface à analyser ;
les figures 2, 3 et 4, décrites précédemment, représentent diverses structures d'extrémité de fibre optique ; et
la figure 5 représente un dispositif optique d'analyse interférométrique de l'état de surface d'un objet à analyser, selon un mode de réalisation de la présente invention.

Par souci de clarté, de mêmes éléments ont été désignés par de mêmes références aux différentes figures et, de plus, comme cela est habituel dans la représentation des micro-dispositifs optiques, les diverses figures ne sont pas tracées à l'échelle.

### Description détaillée

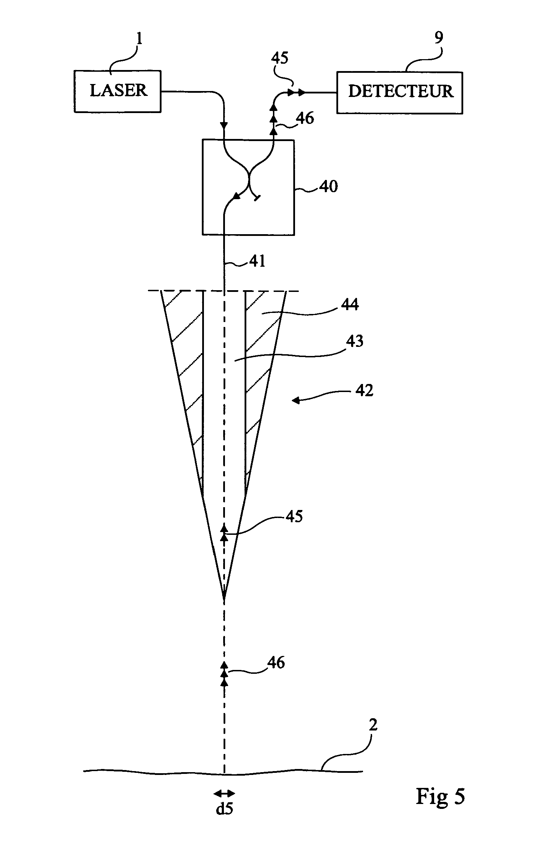

La figure 5 représente de façon schématique un dispositif optique d'analyse interférométrique de l'état de surface d'un matériau. Dans ce dispositif, une source lumineuse 1, par exemple un laser, émettant dans le domaine du visible, envoie par l'intermédiaire d'un coupleur optique directionnel 40 un faisceau lumineux 41 dans une fibre optique 42 dont seule l'extrémité est représentée. Cette fibre optique comprend un coeur 43 et une gaine optique 44, par exemple en oxydes de silicium différemment dopés. La fibre optique est taillée en forme de cône, l'angle au sommet du cône étant de l'ordre de 15 à 25° et la fibre optique étant extrêmement pointue, c'est-à-dire que la partie arrondie au sommet du cône a tout au plus une étendue radiale de l'ordre de 50 nm.

Un premier faisceau 45 est renvoyé par la pointe de la fibre. La plus grande partie du faisceau est envoyée par la fibre vers la surface de l'objet 2 à analyser et un deuxième faisceau 46 est renvoyé par l'objet. Dans le coupleur directionnel 40, les faisceaux en retour 45 et 46 sont renvoyés vers un détecteur 9. Ce détecteur peut être un simple détecteur de lumière permettant d'observer le signal interférométrique entre les faisceaux 45 et 46. Ce détecteur est couplé à un analyseur (non représenté) pour analyser les variations d'état d'interférence quand la pointe de la fibre optique se déplace latéralement par rapport à l'objet. Le détecteur et l'analyseur ne seront pas décrits en détail car ils ont des caractéristiques classiques. On pourra par exemple utiliser une photodiode silicium pour une détection dans le domaine des longueurs d'ondes visibles, un dispositif d'amplification courant/tension, et un convertisseur analogique/numérique permettant l'enregistrement et le traitement sur ordinateur des mesures interférométriques.

Selon une caractéristique importante, la fibre n'est pas revêtue. Ainsi, de l'extrémité pointue de la fibre sort un faisceau relativement divergent. Toutefois, les inventeurs ont constaté que la partie 46 du faisceau renvoyée par l'objet et réentrant dans la fibre correspondait à une petite partie utile de la tache lumineuse envoyée par la fibre sur l'objet. En fait, les inventeurs ont constaté que, pour un faisceau émis à une longueur d'onde de 600 nm, le diamètre d5 de cette partie utile était de l'ordre de la moitié de la longueur d'onde, c'est-à-dire environ 300 nm.

Par ailleurs, on constate un excellent contraste de frange, c'est-à-dire que la lumière renvoyée par l'objet a le plus souvent sensiblement la même intensité que la lumière renvoyée par la fibre même si l'objet présente une faible réflectivité, ce qui est généralement le cas d'objets biologiques immergés dans un milieu liquide. Ces caractéristiques satisfaisantes se maintiennent quand la distance entre la pointe et l'objet varie dans une plage de longueurs étendue allant d'environ 5 à environ 50 µm. On peut par exemple choisir une distance moyenne entre la pointe et l'objet supérieure à 10 µm et effectuer un balayage sans risquer que la pointe ne rencontre l'objet.

Ainsi, avec une fibre se terminant par une micropointe telle que décrite précédemment, on peut procéder à des mesures optiques interférométriques de distance en champ lointain, pour des distances relativement élevées (de 5 à 50 µm) entre la pointe de la fibre et un objet. Ceci va à l'encontre d'un préjugé établi car, dans l'art antérieur, tous les dispositifs dans lesquels la fibre est munie d'une pointe d'extrémité sont ou bien des dispositifs complexes ou bien sont utilisées en champ proche ou en champ lointain mais à des distances pointe surface faibles. Dans le seul cas d'utilisation d'une fibre à pointe d'angle sommet faible de l'ordre de 20 degrés, tel que décrit dans l'article susmentionné de Bergosi et Spajer, la possibilité d'utiliser une micropointe en champ lointain est écartée. Au contraire, les auteurs, quand ils veulent fonctionner en champ lointain arrondissent l'extrémité de la micropointe pour former une lentille ayant une distance focale de l'ordre de quelques micromètres.

Ces caractéristiques satisfaisantes de l'invention semblent provenir des caractéristiques très spécifiques de la pointe, à savoir une pointe effilée non revêtue dont l'extrémité n'est pas arrondie, si ce n'est dans la marge d'erreur inévitable, avec un arrondi s'étendant sur une surface vue en bout non supérieure à 50 nm de diamètre.

La possibilité d'utiliser une fibre à grande distance de la surface d'un objet à analyser présente comme on l'a indiqué précédemment de nombreux avantages, notamment d'éviter les risques de collision entre la pointe et l'objet et donc d'éviter d'avoir à procéder à des remplacements réguliers de la fibre à extrémité conique, et d'éviter la nécessité d'un asservissement qui complique beaucoup le dispositif de mesure.

## Revendications

1. Utilisation d'un dispositif optique pour l'analyse interférométrique de l'état de surface d'un objet (2), le dispositif comprenant :
une source lumineuse (1) ;
une fibre optique (42) apte à recevoir l'onde lumineuse incidente pour la transmettre à l'objet (2), la fibre optique ayant une extrémité libre en forme de cône d'angle au sommet compris entre 15 et 25 degrés, la pointe du cône ayant des dimensions inférieures à 50 x 50 nm ; et
un détecteur (9) apte à détecter une combinaison entre une onde lumineuse (45) réfléchie par la fibre optique et une onde lumineuse (46) renvoyée par l'objet ;
**caractérisée en ce que** le dispositif est agencé par rapport à l'objet de sorte que, pendant l'analyse, la pointe du cône est disposée à une distance de la surface de l'objet comprise entre 5 et 50 µm.

2. Utilisation selon la revendication 1, dans laquelle l'onde lumineuse renvoyée par la surface de l'objet à analyser provient d'une zone délimitée de la surface éclairée d'étendue comprise entre la moitié de la longueur d'onde et la longueur d'onde de l'onde incidente.

3. Utilisation selon la revendication 1 ou 2, dans le cadre d'un système de caractérisation d'objet.

## Patentansprüche

1. Verwendung eines optischen Geräts zur interferometrischen Analyse des Oberflächenzustands eines Objekts (2), wobei das Gerät folgendes aufweist:
eine Lichtquelle (1);
eine Lichtleiter (42), der in der Lage ist die einfallende Lichtwelle zum Empfangen und an das Objekt (2) zu übertragen, wobei der Lichtleiter ein konusförmiges freies Ende mit einem spitzen Winkel im Bereich zwischen 15 und 25 Grad besitzt, wobei die Spitze des Konus eine Durchmesser-Abmessung besitzt, die kleiner als 50 x 50 nm ist, und
einen Detektor (9), der geeignet ist, zum Detektieren einer Kombination zwischen einer Lichtwelle (45), die durch den Lichtleiter reflektiert wurde und einer Lichtwelle (46), die durch das Objekt zurückgesandt wurde;
**dadurch gekennzeichnet, dass** die Vorrichtung bezüglich des Objekts so angeordnet ist, dass während der Analyse die Konusspitze mit einem Abstand gegenüber der Oberfläche des Objekts im Bereich von 5 bis 50 µm angeordnet ist.

2. Verwendung nach Anspruch 1, wobei die Lichtwelle, die durch die Oberfläche des zu analysierenden Objekts zurückgesandt wird, von einem begrenzten Bereich der beleuchteten Oberfläche stammt mit Ausmaßen in dem Bereich zwischen einer halben Wellenlänge und der Wellenlänge der einfallenden Welle.

3. Verwendung nach Anspruch 1 oder 2, in einem Objektcharakterisierungssystem.

## Claims

1. Use of an optical device of interferometric analysis of the surface condition of an object (2), the device comprising:
a light source (1);
an optical fiber (42) capable of receiving the incident light wave to transmit it to the object (2), the optical fiber having a cone-shaped free end with an apex angle ranging between 15 and 25 degrees, the tip of the cone having diameter dimensions smaller than 50 x 50 nm, and
a detector (9) capable of detecting a combination between a light wave (45) reflected by the optical fiber and a light wave (46) sent back by the object;
**characterized in that** the device is arranged with respect to the object so that, during the analysis, the cone tip is arranged at a distance from the surface of the object in the range of 5 to 50 µm.

2. The use of claim 1, wherein the light wave sent back by the surface of the object to be analyzed originates from a delimited area of the illuminated surface having an extension ranging between half the wavelength and the wavelength of the incident wave.

3. The use of claim 1 or 2, in an object characterization system.
